# EUROPEAN PATENT APPLICATION

(11) **EP 3 051 609 A1**
(43) Date of publication of application: **03.08.2016**
(21) Application number: 15153138.1
(22) Date of filing: 29.01.2015
(51) Int. Cl.: H01M 2/16, H01M 8/10

(54) **Plasma-treated separator**

(71) Applicant: Innovia Films Limited, Wigton, Cumbria CA7 9BG (GB)
(72) Inventor: Moffat, Jamie, Wigton, Cumbria CA7 9BG (GB); Hewitt, Jonathan, Wigton, Cumbria CA7 9BG (GB); Fisher, Colin, Wigton, Cumbria CA7 9BG (GB); Read, Simon, Wigton, Cumbria CA7 9BG (GB)
(74) Representative: Brand, Thomas Louis

(57) **Abstract**

A separator for use in a battery or a fuel cell, wherein the separator has an increased surface energy relative to an untreated separator, the increased surface energy resulting from plasma treatment at atmospheric pressure and under an inert atmosphere that further comprises a reactant dopant gas, wherein the oxygen levels in the atmosphere are less than 50 ppm. Also disclosed is a battery or a fuel cell comprising the separator and a method of treating a separator.

## Description

The present invention relates to an improved separator for use in a battery or a fuel cell, specifically a separator that has undergone plasma treatment.

Separators in batteries or fuel cells facilitate ionic transport while preventing physical contact between the anode and cathode. While the separator itself does not participate in the cell reaction, its structure and performance influence the performance of the battery, such as its power density, cycle life and safety.

The low surface energy of polymeric battery separators causes poor wetting to liquid electrolytes such as ethylene carbonate (EC), propylene carbonate (PC), diethyl carbonate (DEC) and dimethyl carbonate. Poor separator wettability can be caused by the hydrophobic character of the surface and can limit the performance of a battery by increasing separator and cell resistance. Solvent leakage from the interface between the separator and the electrodes is also known to cause a decline in the life cycle of secondary lithium batteries. In addition, the separator can have a significant effect on the manufacturing process and/or speed, with slow electrolyte filling being a rate limiting step in the battery assembly process. The wetting speed is also influenced by the separator's pore size, porosity and tortuosity.

There are numerous methods in the art of improving the wettability of the separator. It is known to use compounds such as surfactants as a coating on the separator. However, the effect of the surfactant, which is free to migrate within the cell, on the performance of the battery is not known.

Coating or grafting the separator with a polymeric material is also known in the art. However, this can lead to a reduction in porosity as a result of pore filling, which thereby increases cell resistance. Further, grafting involves complex, multi-step processes.

WO0034384 discloses the use of ion beams, gamma rays, plasma or electron beams in the presence of a reactive gas selected from a group consisting of hydrogen, oxygen, nitrogen, ammonia, carbon monoxide, carbon dioxide, carbon tetrafluoride, methane, and N2O to improve the wettability of a separator for use in a battery. The treatment is generally done under a vacuum.

US2014/0050989 discloses a separator having a surface energy of about 45 to 50 mN/m which can be prepared by radiating a plasma on a polymer film, using standard corona treatment. This treatment acts to improve wettability of the separator.

US2009/130547 discloses a polyethylene film with a specific composition and made in a certain way, which may be used to create a separator for a lithium battery. The film may be plasma treated in a number of different ways in the presence of numerous different gases.

It is therefore desirable to provide a method of modifying a separator that is cost effective, scalable and easily applicable to a range of commercially available separators, as well as providing a high level of wettability compared to the methods of the prior art.

According to a first aspect of the present invention, there is provided a separator for use in a battery or a fuel cell, wherein the separator has an increased surface energy relative to an untreated separator, the increased surface energy resulting from plasma treatment at atmospheric or other pressure and under an inert atmosphere that further comprises a reactant dopant gas, wherein the oxygen level in the atmosphere is less than 50 ppm.

The separator of the first aspect of the present invention has a high wettability and therefore has a low separator resistance, which can act to improve the performance of the cell. Additionally, treating the separator in the claimed manner is relatively low cost as no vacuum is required. The process is also scalable and easily applicable to a number of separators.

The low level of oxygen present during the plasma treatment reduces the level of degradation of the backbone of the polymeric compounds in the separator. This can lead to low molecular weight fragments that may become solubilized into the electrolyte, which can have a detrimental effect on the performance of the fuel cell or battery.

The use of a separator with an increased surface energy can increase the speed of electrolyte filling, decrease the number of bubbles forming in the electrolyte, decrease the voltage drop and increase ionic mass transport.

Preferably, the oxygen level in the atmosphere during plasma treatment is less than 15 ppm. The term "oxygen level" refers to the level of oxygen gas (O₂) in the atmosphere.

The plasma treatment may be carried at atmospheric pressure. Alternatively, the plasma treatment may be carried out under increased pressure.

The reactant dopant gas may comprise an unsaturated hydrocarbon, organic and inorganic silanes, an oxidative gas or a reductive gas. These are particularly effective in increasing the surface energy of the separator. Preferably, the dopant gas comprises an unsaturated hydrocarbon or a reductive gas. The dopant gas may alternatively be selected from C₂H₂, CO₂, N₂O, NF₃, NH₃ and SF₆, more preferably from C₂H₂, N₂O, NF₃, NH₃ and SF₆. Preferably, only the inert gas of the inert atmosphere and the reactant dopant gas are present in the atmosphere during the treatment of the film.

The concentration of the dopant gas may be between 0.005 to 20%, or preferably 0.01 to 2% or more preferably 0.02 to 0.2%. Percentages are by volume of the total gas flow.

The inert atmosphere may comprise an inert gas such as nitrogen, argon, hydrogen and/or helium, or any other inert gas known to the skilled person. Nitrogen is preferred due to cost. However, nitrogen has the highest relative breakdown voltage, followed by argon, then hydrogen, with helium having the lowest. Lower breakdown voltages require less power to generate a plasma and so hydrogen or helium may also be beneficial to use.

The flow of gas during plasma treatment may be between 0.004 and 20 slm, preferably between 0.01 and 12 slm, more preferably between 0.02 and 8 slm and even more preferably between 0.04 and 4 slm.

The plasma treatment may comprise pulsed corona discharge or dielectric barrier discharge.

The contact angle of the electrolyte and the separator surface may be less than 60°, preferably less than 50° and more preferably less than 40°. One preferred electrolyte may be 1 M LiPF6 in 1:1 ethylene carbonate (EC): diethylcarbonate (DMC), with which the contact angle with the separator may be less than 60°, preferably less than 50° and more preferably less than 40°.

The separator may comprise a polymeric compound. The polymeric compound may be in the form of a polymer film or fibre. Optionally, the polymer film may comprise a polyolefin, polyesters, polyamides, polycarbonates and bio-polymers such as cellulose and PLA. The film may be a multi-layered film, a microporous film, a woven web or a non-woven web.

The separator may additionally or alternatively comprise a polymeric material coating. Optionally, the polymer coating may comprise a polyolefin, polyesters, polyamides, polycarbonates and bio-polymers such as cellulose and PLA.

The present invention is particularly advantageous when the separator comprises polypropylene. It is thought that the tertiary hydrogen on the backbone of the polypropylene molecule is particularly susceptible to the degradation discussed above.

According to a second aspect of the present invention, there is provided a battery or a fuel cell comprising a separator as discussed above. The battery may be a lithium ion battery.

According to a third aspect of the present invention, there is provided a method of increasing the surface energy of a separator for use in a battery or a fuel cell, comprising plasma treating the separator at atmospheric or other pressure under an inert atmosphere that further comprises a reactant dopant gas wherein the oxygen level in the atmosphere is less than 50 ppm.

Preferably, the oxygen level in the atmosphere during plasma treatment is less than 15 ppm. The term "oxygen level" refers to the level of oxygen gas (O₂) in the atmosphere.

The plasma treatment may be carried at atmospheric pressure. Alternatively, the plasma treatment may be carried out under increased pressure.

The reactant dopant gas may comprise an unsaturated hydrocarbon, organic and inorganic silanes, an oxidative gas or a reductive gas. These are particularly effective in increasing the surface energy of the separator. Preferably, the dopant gas comprises an unsaturated hydrocarbon or a reductive gas. The dopant gas may alternatively be selected from C₂H₂, CO₂, N₂O, NF₃, NH₃ and SF₆, more preferably from C₂H₂, N₂O, NF₃, NH₃ and SF₆. Preferably, only the inert gas of the inert atmosphere and the reactant dopant gas are present in the atmosphere during the treatment of the film.

The concentration of the dopant gas may be between 0.005 to 20%, or preferably 0.01 to 2% or more preferably 0.02 to 0.2%. Percentages are by volume of the total gas flow.

The inert atmosphere may comprise an inert gas such as nitrogen, argon, hydrogen and/or helium, or any other inert gas known to the skilled person. Nitrogen is preferred due to cost. However, nitrogen has the highest relative breakdown voltage, followed by argon, then hydrogen, with helium having the lowest. Lower breakdown voltages require less power to generate a plasma and so hydrogen or helium may also be beneficial to use.

The flow of gas during plasma treatment may be between 0.004 and 20 slm, preferably between 0.01 and 12 slm, more preferably between 0.02 and 8 slm and even more preferably between 0.04 and 4 slm.

The plasma treatment may comprise pulsed corona discharge or dielectric barrier discharge.

The contact angle of the electrolyte and the separator surface may be less than 60°, preferably less than 50° and more preferably less than 40°. One preferred electrolyte may be 1 M LiPF6 in 1:1 ethylene carbonate (EC): diethylcarbonate (DMC), with which the contact angle with the separator may be less than 60°, preferably less than 50° and more preferably less than 40°.

The separator may comprise a polymeric compound. The polymeric compound may be in the form of a polymer film or fibre. Optionally, the polymer film may comprise a polyolefin, polyesters, polyamides, polycarbonates and bio-polymers such as cellulose and PLA. The film may be a multi-layered film, a microporus film, a woven web or a non-woven web.

The separator may additionally or alternatively comprise a polymeric material coating. Optionally, the polymer coating may comprise a polyolefin, polyesters, polyamides, polycarbonates and bio-polymers such as cellulose and PLA.

The present invention is particularly advantageous when the separator comprises polypropylene. It is thought that the tertiary hydrogen on the backbone of the polypropylene molecule is particularly susceptible to the degradation discussed above.

According to a fourth aspect of the present invention, there is provided a use of a battery or a fuel cell as described above, to generate power.

According to a fifth aspect of the present invention, there is provided an electronic device, automobile or CHP station including a battery or fuel cell described above.

According to a sixth aspect of the present invention, there is provided a separator for use in a battery or a fuel cell, wherein the separator has an increased surface energy relative to an untreated separator, the increased surface energy resulting from plasma treatment at atmospheric pressure and under a nitrogen atmosphere that further comprises a reactant dopant gas.

According to a seventh aspect of the present invention, there is provided a battery or a fuel cell comprising a separator according to any preceding claim. The battery may be a lithium ion battery.

According to a eighth aspect of the present invention, there is provided a method of increasing the surface energy of a separator for use in a battery or a fuel cell, comprising plasma treating the separator at atmospheric pressure under a nitrogen atmosphere that further comprises a reactant dopant gas.

One or more embodiments in accordance with the invention will now be more particularly described by way of example only with reference to the following Examples and Figures in which:
Figure 1 illustrates a gas feeding system that can be used to produce the separator of an aspect of the present invention;
Figure 2 illustrates the contact angle between the surface of the separators tested and a solution of 1 M LiPF6 in 1:1 ethylene carbonate (EC): diethylcarbonate (DMC); and
Figure 3 illustrates a scanning electron micrograph view of an untreated separator compared to a separator according to an aspect of the present invention.

### EXAMPLES

### Plasma generation

A high voltage generator and transformers with a maximum power of 2000 W and a maximum voltage of 17 kV were used. The high voltage electrode consisted of four parts, each of which generated an aerial plasma zone of 200 mm x 303 mm. The gap between the electrode system and the substrate was adjusted to 1 mm.

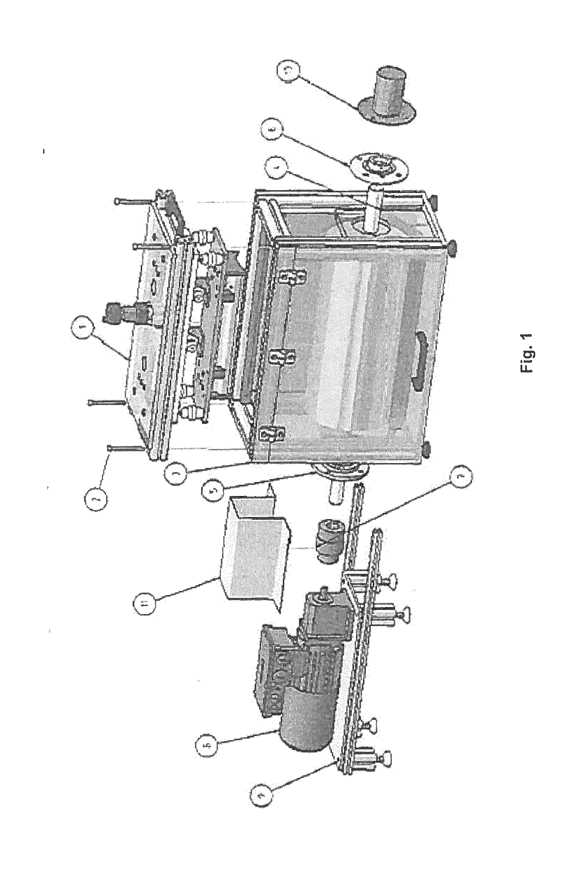

Figure 1 illustrates the gas feeding system that was used to create the separators according to an aspect of the present invention. The system comprised a height adjustable electrode and gas supply system (1,2), a chamber for adjustment of environmental gas (3), which contained a siliconised roller (4) and a drive motor (8).

Sheets of Celgard 2400 were treated one side with plasma at a corona dose of 65 W min/m² under atmospheric pressure. The phase consisted of pure nitrogen with a gas flow of 20 slm (standard litre per minute), with the addition of a doping gas at both high and low concentration (see Tables 1 and 2).

**Table 1 - Fixed process parameters**

| **Parameter** | **Value** | **Unit** |
|---|---|---|
| **Combined gas flow** | 20 | slm |
| **Purge gas flow (N2)** | 70 | slm |
| **Roller velocity** | 300 | mm.s-1 |
| **Treatment cycles** | 1 | |
| **Treatment width** | 303 | mm |
| **Treatment length** | 80 | mm |
| **Generator power** | 355 | W |
| **Corona dose** | 65 | W.min.m-2 |
| **Electrode substrate gap** | 1 | mm |

**Table 2 - Dopant gas and process variables**

| **Sample number** | **Doping Gas** | **Concentration / %** | **Flow / slm** | **Purge time / min** |
|---|---|---|---|---|
| **1** | Untreated Celgard 2400 | | | |
| **2** | N2 | - | 20 | 2 |
| **3** | C2H2 | 0.02 | 0.004 | 20 and 12 |
| **4** | C2H2 | 0.5 | 0.1 | 2 |
| **5** | CO2 | 0.2 | 0.04 | 2 |
| **6** | CO2 | 20 | 4 | 2 |
| **7** | N2O | 0.2 | 0.04 | 2 |
| **8** | N2O | 2 | 4 | 2 |
| **9** | NF3 | 0.2 | 0.04 | 2 |
| **10** | NF3 | 2 | 4 | 2 |
| **11** | NH3 | 0.2 | 0.04 | 2 |
| **12** | NH3 | 2 | 4 | 2 |
| **13** | SF6 | 0.2 | 0.04 | 2 |
| **14** | SF6 | 2 | 0.4 | 2 |

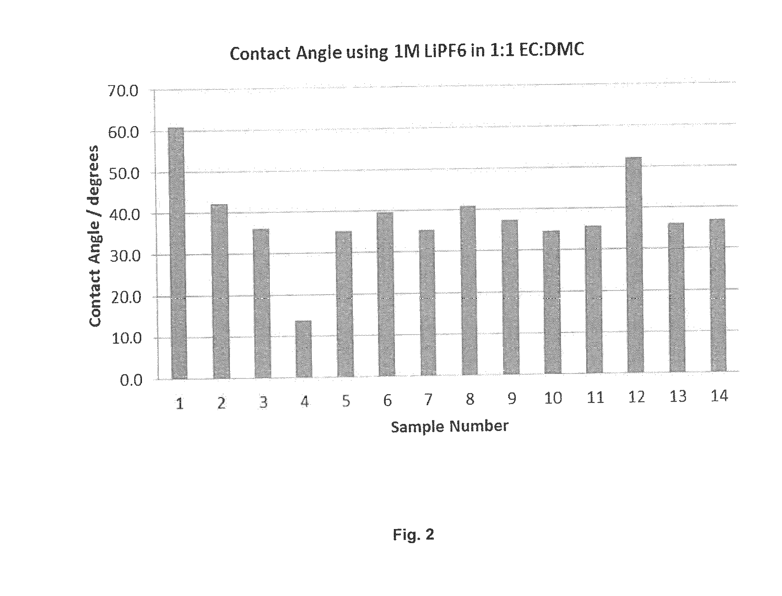

The contact angle between the treated surface of the separator and a solution of 1 M LiPF6 in 1:1 ethylene carbonate (EC): diethylcarbonate (DMC) was determined. The results are shown in Figure 2.

As illustrated in Figure 2, all treated samples were found to have contact angles lower than those of the untreated separator (sample 1), indicating improved wetting to electrolyte. The lowest contact was obtained for sample 4, which was treated with 0.5 % C₂H₂ in nitrogen.

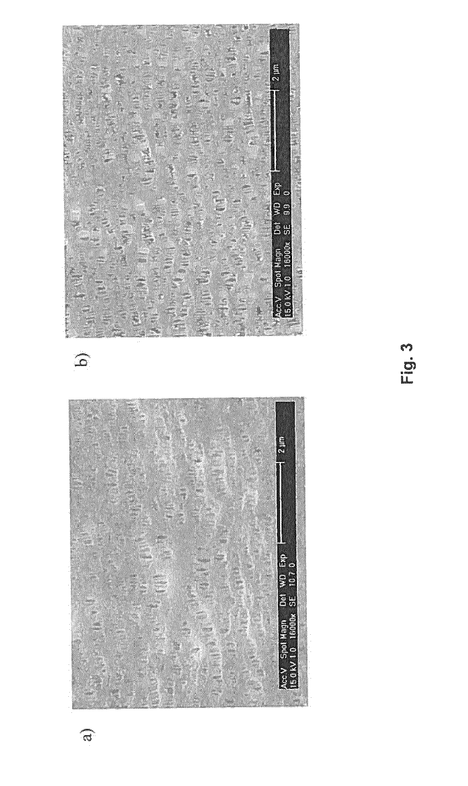

Figure 3 illustrates SEM images showing a) sample 1 (comparative), untreated Celgard 2400, and b) sample 4, Celgard 2400 plasma treated with 0.5 % C₂H₂ in N₂. The images confirm that there is no change in the morphology of Celgard 2400 as a result of the plasma treatment. There is therefore expected to be no reduction in porosity as a result of pore filling.

Negative Ion ToF-SIMs analysis of samples 1, 2 and 4 confirm the increased presence of electronegative species on the plasma treated separators, as shown in Table 3. Sample 4 displays particularly high levels of C-N species and gives rise to the lowest observed electrolyte contact angle.

**Table 3 - Species ratio data from Negative ToF SIMs**

| | **O/C** | **OH/C** | **O/CH** | **OH/CH** | **CN/C** |
|---|---|---|---|---|---|
| **Sample 1** | tbc | | | | |
| **Sample 2** | 3.625 | 3.255 | 0.965 | 0.87 | 3.215 |
| **Sample 4** | 3.66 | 3.07 | 1.215 | 1.015 | 14.485 |

## Claims

1. A separator for use in a battery or a fuel cell, wherein the separator has an increased surface energy relative to an untreated separator, the increased surface energy resulting from plasma treatment at atmospheric or other pressure under an inert atmosphere that further comprises a reactant dopant gas, wherein the oxygen level in the atmosphere is less than 50 ppm.

2. The separator according to Claim 1, wherein the reactant dopant gas comprises an unsaturated hydrocarbon, organic and inorganic silanes, an oxidative gas or a reductive gas.

3. The separator according to Claim 2, wherein the dopant gas comprises an unsaturated hydrocarbon or a reductive gas.

4. The separator according to Claim 2, wherein the dopant gas is selected from C₂H₂, N₂O, NF₃, NH₃ and SF₆.

5. The separator according to any preceding claim, wherein the concentration of the dopant gas is between 0.005 to 20%, or preferably 0.01 to 2% or more preferably 0.02 to 0.2%.

6. The separator according to any preceding claim, wherein the inert atmosphere comprises nitrogen, argon, hydrogen and/or helium.

7. The separator according to any preceding claim, wherein the plasma treatment comprises pulsed corona discharge or dielectric barrier discharge.

8. The separator according to any preceding claim, wherein the contact angle of the electrolyte and the separator surface is less than 60°, preferably less than 50° and more preferably less than 40°.

9. The separator according to any preceding claim, wherein the separator comprises a polymer film or fibre.

10. The separator according to any preceding claim, wherein the separator comprises a polymeric material coating.

11. The separator according to Claim 9 or 10, wherein the polymer in the film or coating comprises one or more of a polyolefin, polyesters, polyamides, polycarbonates and bio-polymers such as cellulose and PLA.

12. A battery or a fuel cell comprising a separator according to any preceding claim.

13. The battery of Claim 12, wherein the battery is a lithium ion battery.

14. A method of increasing the surface energy of a separator for use in a battery or a fuel cell, comprising plasma treating the separator at atmospheric or other pressure under an inert atmosphere that further comprises a reactant dopant gas, wherein the oxygen level in the atmosphere is less than 50 ppm.

15. The method according to Claim 14, wherein the reactant dopant gas comprises an unsaturated hydrocarbon, organic and inorganic silanes, an oxidative gas or a reductive gas.

16. The method according to Claim 15, wherein the dopant gas comprises an unsaturated hydrocarbon or a reductive gas.

17. The method according to Claim 15, wherein the dopant gas is selected from C₂H₂, CO₂, N₂O, NF₃, NH₃ and SF₆.

18. The method according to any one of Claims 14 to 17, wherein the concentration of the dopant gas is between 0.005 to 20%, or preferably 0.01 to 2% or more preferably 0.02 to 0.2%.

19. The method according to any one of Claims 14 to 18, wherein the inert atmosphere comprises nitrogen, argon, hydrogen and/or helium.

20. The method according to any one of Claims 14 to 19, wherein the plasma treatment comprises pulsed corona discharge or dielectric barrier discharge.

21. The method according to any one of Claims 14 to 20, wherein the contact angle of the electrolyte and the separator surface is less than 60°, preferably less than 50° and more preferably less than 40°.

22. The method according to any one of Claims 14 to 21, wherein the separator comprises a polymer film or fibre.

23. The method according to Claim 14 to 22, wherein the separator comprises a polymeric material coating.

24. The method according to Claim 22 or 23, wherein the polymer in the film or fibre or coating comprises one or more of a polyolefin, polyesters, polyamides, polycarbonates and bio-polymers such as cellulose and PLA.

25. Use of a battery or a fuel cell according to Claim 12 or 13 to generate power.

26. An electronic device, automobile or CHP station including the battery or fuel cell of Claim 12 or 13.
